# EUROPEAN PATENT APPLICATION

(11) **EP 4 763 922 A1**
(43) Date of publication of application: **24.06.2026**
(21) Application number: 24856295.1
(22) Date of filing: 06.08.2024
(51) Int. Cl.: C08L 97/00, C08L 21/00, C08L 101/00

(54) **LIGNIN COMPOSITION AND USE OF SAME**

(30) Priority: 18.08.2023 JP 2023133408
(71) Applicant: Idemitsu Kosan Co.,Ltd., Tokyo 100-8321 (JP)
(72) Inventor: TOI, Hiroyuki, Tokyo 100-8321 (JP); MURATA, Mitsuko, Tokyo 100-8321 (JP)
(74) Representative: Gille Hrabal Partnerschaftsgesellschaft mbB Patentanwälte
(86) International application number: PCT/JP2024/028095
(87) International publication number: WO 2025/041604

(57) **Abstract**

A lignin composition including two or more compounds represented by formula (1) below, in which a total content of the compounds is 0.50 mass% or more.

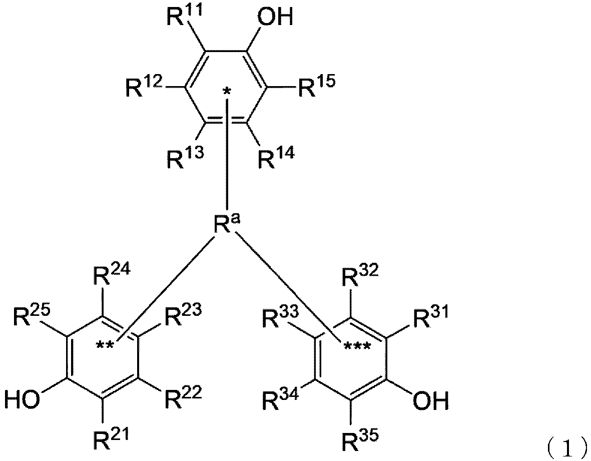

## Description

### Technical Field

The present invention relates to a lignin composition and use of the same.

### Background Art

Conventionally, attempts have been made to improve mechanical physical properties such as flexural strength of a formed article obtained by adding lignin modified with an acid or the like to a resin (Patent Literature 1).

However, thermosetting resins have problems that when adding lignin, the viscosity increases and the fluidity is lowered. In view of such a problem, it is disclosed that by adding a lignin composition containing a specific phenol dimer in a specific total content to a thermosetting resin, fluidity suitable for forming can be maintained, and physical properties such as mechanical strength of a formed body can be improved (Patent Literature 2).

### Citation List

### Patent Literature

Patent Literature 1: WO 2015/147165 A
Patent Literature 2: JP 2022-104522 A

### Summary of Invention

However, in the conventional techniques including Patent Literature 1 and 2, there has been found a room for further improvement from the viewpoint of improving the fluidity when the lignin composition is added to the thermosetting resin and from the viewpoint of improving surface smoothness of a formed body.

An object of the present invention is to provide a lignin composition which can improve mechanical physical properties, can remarkably suppress a decrease in fluidity, and can improve surface smoothness of a formed body by being added to a thermosetting resin or the like.

As a result of intensive studies, the present inventors have found that when a lignin composition containing a specific phenol trimer in a specific total content is added to a thermosetting resin or the like, mechanical physical properties can be improved, a decrease in fluidity can be remarkably suppressed, and surface smoothness of a formed body can be improved, thereby completing the present invention.

According to the present invention, the following lignin composition and the like can be provided.
1. A lignin composition including two or more compounds represented by formula (1) below, in which a total content of the compounds is 0.50 mass% or more. 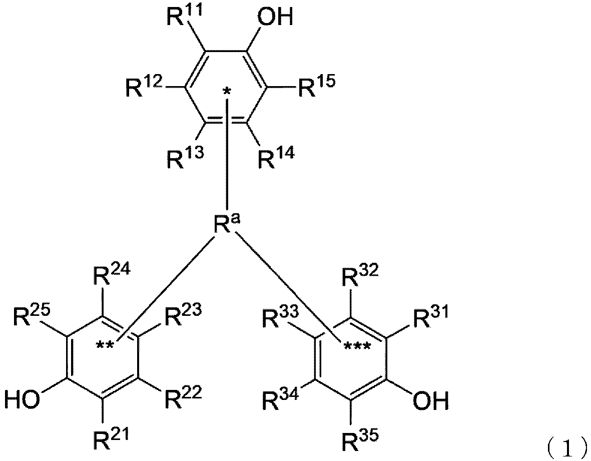 (In the formula (1),
   R^{a} represents a trivalent saturated hydrocarbon group having 1 to 3 carbon atoms;
   each of single bonds *, **, and *** of R^{a} is bonded to any of the carbon atoms constituting a corresponding benzene ring;
   one of R¹¹ to R¹⁵ is a single bond that is bonded to R^{a};
   one of R²¹ to R²⁵ is a single bond that is bonded to R^{a};
   one of R³¹ to R³⁵ is a single bond that is bonded to R^{a}; and
   R¹¹ to R¹⁵, R²¹ to R²⁵, and R³¹ to R³⁵, which are not single bonds bonded to R^{a}, each represent a hydrogen atom, a methoxy group, a hydroxy group, a furyl group, a hydroxymethylfuryl group, a hydroxyphenyl group, a hydroxymethoxyphenol group, or a hydroxydimethoxyphenol group.)
2. The lignin composition according to 1, in which a weight average molecular weight (Mw) is 1,000 to 3,000.
3. The lignin composition according to 1 or 2, in which a molecular weight distribution (Mw/Mn) is 1.0 to 4.0.
4. The lignin composition according to any one of 1 to 3, in which a total content of the compounds represented by the formula (1) is 0.05 to 5 mass%.
5. The lignin composition according to any one of 1 to 4, in which a content of compound (2) below is 0.1 mass% or less. 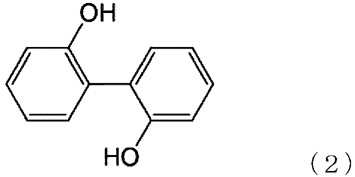
6. The lignin composition according to any one of 1 to 5, in which a content of a free phenol monomer is 0.02 mass% or more and 5.0 mass% or less.
7. The lignin composition according to any of 1 to 6, which has a softening point of 100°C or higher and lower than 250°C.
8. A lignin composition, in which a difference between integral distribution values (%) at molecular weights LogM 2.55 and 2.73 of the lignin composition, as measured by gel permeation chromatography (GPC), is 15 or more and 25 or less.
9. A lignin composition, in which a maximum value of a peak of a differential distribution value (dw/dLogM) present at a molecular weight of LogM 2.60 to 2.75 of the lignin composition, as measured by gel permeation chromatography (GPC), is 80 or more and 250 or less.
10. A thermosetting resin composition including:
   the lignin composition according to any of 1 to 9; and
   a thermosetting resin.
11. The thermosetting resin composition according to 10, in which the thermosetting resin includes one or more selected from the group consisting of a phenolic resin, a urethane resin, an epoxy resin, a urea resin, a melamine resin, an unsaturated polyester resin, a diallyl phthalate resin, a silicone resin, an alkyd resin, and a polyimide.
12. Use of the lignin composition according to any one of 1 to 9 for accelerating a crosslinking reaction in a thermosetting resin forming material containing a thermosetting resin.
13. The use of the lignin composition according to 12, in which the thermosetting resin includes one or more selected from the group consisting of a phenolic resin, a urethane resin, an epoxy resin, a urea resin, a melamine resin, an unsaturated polyester resin, a diallyl phthalate resin, a silicone resin, an alkyd resin, and a polyimide.
14. A method for accelerating a crosslinking reaction using the lignin composition according to any one of 1 to 9, in a thermosetting resin forming material containing a thermosetting resin.
15. A modifier for a thermosetting resin or a crosslinking reaction accelerator for a thermosetting resin, including the lignin composition according to any one of 1 to 9.
16. A rubber composition including the lignin composition of any of 1 to 9 and a rubber material.
17. A formed body obtained by curing the thermosetting resin composition according to 10 or the rubber composition according to 16.

According to the present invention, it is possible to provide a lignin composition which can improve mechanical physical properties, can remarkably suppress a decrease in fluidity, and can improve surface smoothness of a formed body by being added to a thermosetting resin or the like.

### Brief Description of Drawings

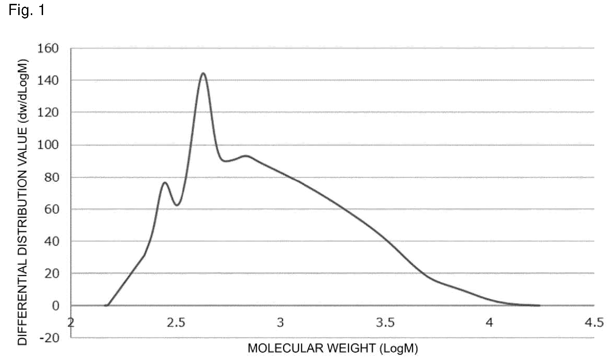

Fig. 1 is a chart of differential distribution values of molecular weight obtained by gel permeation chromatography (GPC) (Example 1).

### Description of Embodiments

Hereinafter, in the present specification, "x to y" represents a numerical range of "x or more and y or less". Upper limit values and lower limit values written for numerical ranges can be arbitrarily combined.

In addition, among the individual embodiments of the aspects according to the present invention described below, it is possible to combine two or more embodiments with each other as long as they do not contradict each other, and an embodiment in which two or more embodiments are combined is also an embodiment of the aspect according to the present invention.

### 1. Lignin Composition

A lignin composition according to a first aspect of the present invention includes two or more compounds represented by the following formula (1), and a total content of the compounds is 0.50 mass% or more.

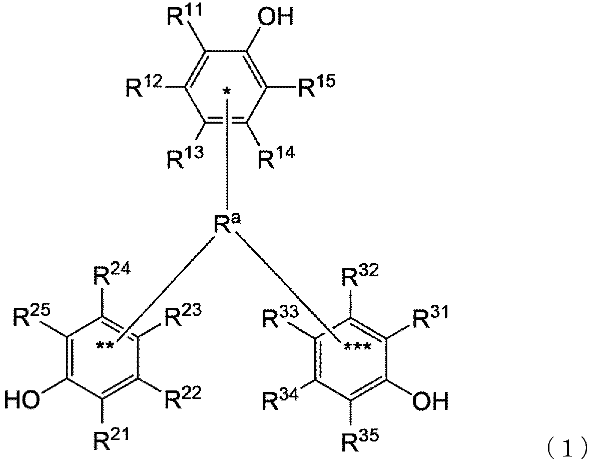

In the formula (1),
R^{a} represents a trivalent saturated hydrocarbon group having 1 to 3 carbon atoms.
each of single bonds *, **, and *** of R^{a} is bonded to any of the carbon atoms constituting a corresponding benzene ring;
one of R¹¹ to R¹⁵ is a single bond that is bonded to R^{a};
one of R²¹ to R²⁵ is a single bond that is bonded to R^{a};
one of R³¹ to R³⁵ is a single bond that is bonded to R^{a}; and
R¹¹ to R¹⁵, R²¹ to R²⁵, and R³¹ to R³⁵, which are not single bonds bonded to R^{a}, each represent a hydrogen atom, a methoxy group, a hydroxy group, a furyl group, a hydroxymethylfuryl group, a hydroxyphenyl group, a hydroxymethoxyphenol group, or a hydroxydimethoxyphenol group.

According to the lignin composition of the present aspect, mechanical physical properties can be improved by adding the lignin composition to a thermosetting resin or the like, and an effect of remarkably suppressing a decrease in fluidity when the lignin composition is added to a thermosetting resin or the like is obtained. Therefore, the thermosetting resin to which the lignin composition of the present aspect is added is likely to be extremely uniformly filled in a mold or the like during forming due to the fluidity thereof, and forming defects such as short shots can be remarkably prevented. Therefore, the obtained formed body is excellent in dimensional accuracy and the like, and can suitably exhibit improved mechanical physical properties.

In addition, in particular, in comparison with the technique of Patent Literature 2 (a lignin composition containing a specific phenol dimer in a specific total content), it is possible to remarkably suppress a decrease in fluidity when the lignin composition is added to a thermosetting resin or the like, and formability is remarkably improved. In addition, mechanical physical properties (flexural strength and flexural modulus) are further improved. Furthermore, since the lignin composition can exhibit excellent compatibility with a thermosetting resin, a remarkable effect of improving the surface smoothness (smoothness) of an obtained formed body is obtained.

With regard to the compound represented by the formula (1), examples of the trivalent saturated hydrocarbon group having 1 to 3 carbon atoms represented by R^{a} include the following saturated hydrocarbon groups. In the following saturated hydrocarbon group, each of the single bonds *, **, and *** is bonded to any one of carbon atoms constituting the corresponding benzene ring in the formula (1).

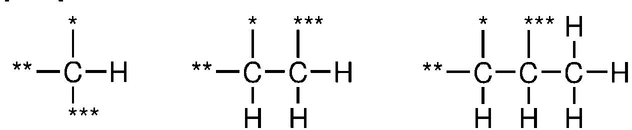

The amount of lignin contained in the lignin composition can be confirmed as a value calculated by measuring the amount of methoxyl groups contained in the lignin composition in accordance with the method for measuring methoxyl groups by the Viebock and Schwappach methods (see "Methods for lignin chemistry research", pp. 336-340, published by Uni publishing, 1994), and substituting the obtained measured value of the amount of methoxyl groups as the amount of lignin.

In the present specification, "lignin" is a polymer compound obtained by polymerizing three kinds of lignin monomers which are p-hydroxycinnamic alcohols, and has a basic skeleton represented by the following formula (A).

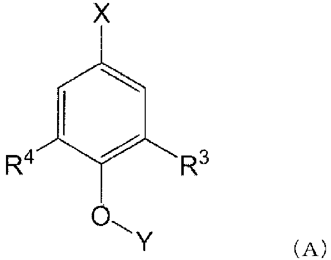

In the formula (A), R³ and R⁴ which are substituents represent a hydrogen atom or a methoxy group. One in which both R³ and R⁴ are hydrogen atoms is referred to as a p-hydroxyphenyl nucleus (H-type skeleton), one in which either one of R³ and R⁴ is a hydrogen atom is referred to as a guaiacyl nucleus (G-type skeleton), and one in which both R³ and R⁴ are not hydrogen atoms is referred to as a syringyl nucleus (S-type skeleton).

In the formula (A), X represents a bond to a carbon atom, and Y represents a bond to a hydrogen atom or a carbon atom.

The lignin composition of the present aspect (and second and third aspects described later) is a composition containing the lignin. A content of the lignin in the lignin composition is, for example, 80 to 95 mass%.

In particular, the lignin composition of the present aspect (first aspect) is characterized by containing two or more compounds (phenol trimers) represented by the formula (1) as described above in addition to the lignin.

The type and content of the phenol trimers contained in the lignin composition are confirmed by liquid chromatography/mass spectrometry (LC/MS).

In a case where measurement by liquid chromatography/mass spectrometry (LC/MS) is performed on the lignin composition, the content of the phenol trimers in the entire lignin composition can be calculated.

In addition, in a case where measurement by liquid chromatography/mass spectrometry (LC/MS) is performed on the lignin composition, the content of a phenol trimers in the entire thermosetting resin composition described later can be calculated according to content proportions of the lignin composition and other components such as a phenolic resin.

In LC/MS, it is assumed that the lignin composition contains the following compounds (a) to (e) as the compound represented by the formula (1). In a case where the content of a target compound is equal to or less than the detection limit, that is, less than 0.001 mass%, it is determined that the lignin composition does not contain the target compound. Details of the measurement are described in Examples.

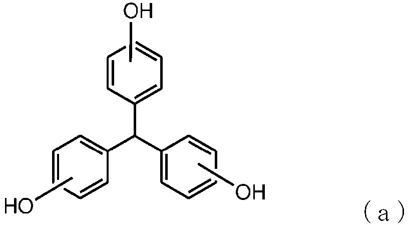

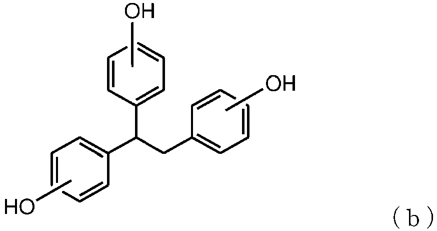

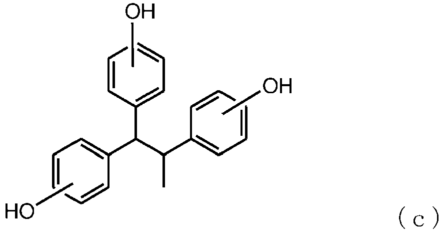

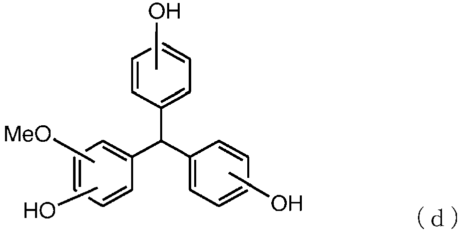

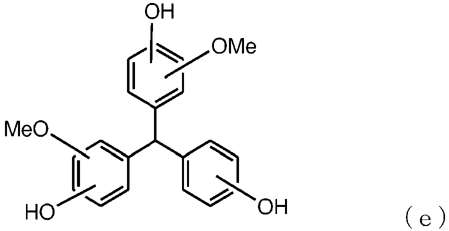

In one embodiment, the lignin composition includes two or more compounds selected from compounds (a) to (e).

In one embodiment, the lignin composition has a total content of the compounds (a) to (e) of 0.50 mass% or more.

In one embodiment, the total content of the compounds represented by the formula (1) (or the total content of the compounds (a) to (e)) with respect to the entire lignin composition is, for example, 0.50 mass% or more, 0.60 mass% or more, 0.70 mass% or more, 0.80 mass% or more, 0.90 mass% or more, 1.00 mass% or more, 1.10 mass% or more, or 1.20 mass% or more, and is 5.00 mass% or less, 4.00 mass% or less, 3.00 mass% or less, 2.00 mass% or less, or 1.50 mass% or less.

In one embodiment, the total content of the compound represented by the formula (1) (or the total content of the compounds (a) to (e)) with respect to the entire lignin composition is 0.50 to 5.00 mass%, 0.60 to 4.00 mass%, 0.70 to 3.00 mass%, 0.80 to 2.00 mass%, or 0.90 to 1.50 mass%.

The total content of the compound represented by the formula (1) with respect to the entire lignin composition can be appropriately adjusted according to, for example, the thermosetting resin to be used, forming conditions, and the like.

In one embodiment, the weight average molecular weight (Mw) of the lignin composition is 1,000 to 3,000. This makes it easy to maintain fluidity when blended in the thermosetting resin. In addition, a formed body having good mechanical physical properties is easily obtained. The Mw may be 1300 or more or 1500 or more. In addition, the Mw may be 2900 or less or 2700 or less.

In one embodiment, the molecular weight distribution (Mw/Mn) of the lignin composition is 1.0 to 4.0. Mw/Mn may be 1.5 or more, 2.0 or more, 2.3 or more, 2.4 or more, 2.5 or more, or 2.6 or more. Mw/Mn may be 3.3 or less, 3.0 or less, or 2.7 or less.

Each molecular weight of the lignin composition is measured by GPC as described in Examples described later.

In one embodiment, the content of the following compound (2) with respect to the entire lignin composition is 0.1 mass% or less, and may be 0.05 mass% or less.

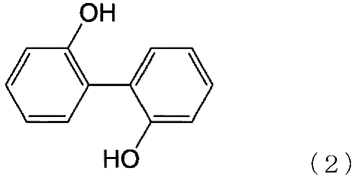

When the content of the compound (2) is within the above range, loss of a solvent component due to a reaction between solvent components is suppressed in a lignin extraction step to be described later, and it can be said that the composition is obtained in a manner that a solvent appropriately participates in lignin production in a lignin extraction step.

The content of the compound (2) is measured by a method described in Examples described later.

In one embodiment, the content of the free phenol monomer with respect to the entire lignin composition is 0.02 mass% or more and 5.0 mass% or less. The free phenol monomer contained in the lignin composition is one in which a part of phenol mainly used in the production of the lignin composition is not removed and remains. The content of phenol may be 0.1 mass% or more, 0.5 mass% or more, 1.0 mass% or more, or 2.0 mass% or more.

The content of phenol is measured by a method described in Examples described later.

In one embodiment, a softening point of the lignin composition is 100°C or higher and lower than 250°C. The softening point may be 105°C or higher, 110°C or higher, 120°C or higher, or 130°C or higher. In addition, it may be 200°C or lower, 180°C or lower, or 160°C or lower.

The softening point is measured by a method described in Examples described later.

In one embodiment, 90 mass% or more, 95 mass% or more, 98 mass% or more, 99 mass% or more, 99.5 mass% or more, or substantially 100 mass% of the lignin composition includes:
lignin, the compound represented by the formula (1), the compound represented by the formula (2), and phenol (free phenol monomer); or
lignin, the compounds represented by the formulas (a) to (e), the compound represented by the formula (2), and phenol (free phenol monomer).

In the case of "substantially 100 mass%," an inevitable impurity may be contained.

In one embodiment, a ratio of the compound represented by the formula (1) (or the compounds represented by the formulas (a) to (e)) is 0.4 to 1.8 parts by mass with respect to 100 parts by mass of lignin contained in the lignin composition.

In one embodiment, a ratio of the compound represented by the formula (2) is 0.003 to 0.1 parts by mass with respect to 100 parts by mass of lignin contained in the lignin composition.

In one embodiment, a ratio of the phenol (free phenol monomer) is 0.8 to 3.0 parts by mass with respect to 100 parts by mass of lignin contained in the lignin composition.

The content of each component with respect to 100 parts by mass of lignin described here can also be held in a thermosetting resin composition or a formed body described later.

In the lignin composition according to the second aspect of the present invention, a difference between integral distribution values (%) at molecular weights LogM 2.55 and 2.73 of the lignin composition, as measured by GPC, is 15 or more and 25 or less.

According to the lignin composition of the present aspect, the same effects as those of the lignin composition of the first aspect are obtained.

In one embodiment, the difference is 15 or more, 16 or more, or 17 or more, and is 25 or less, 24 or less, or 23 or less.

In one embodiment, in the lignin composition, a maximum value of a peak of a differential distribution value (dw/dLogM) present at a molecular weight of LogM 2.40 to 2.60 of the lignin composition, as measured by GPC, is 50 or more and 150 or less.

In one embodiment, the maximum value is 50 or more, 55 or more, 60 or more, 65 or more, or 70 or more, and is 150 or less, 140 or less, 130 or less, 120 or less, 110 or less, or 105 or less.

In the lignin composition according to the third aspect of the present invention, a maximum value of a peak of a differential distribution value (dw/dLogM) present at a molecular weight of LogM 2.60 to 2.75 of the lignin composition, as measured by GPC, is 80 or more and 250 or less.

According to the lignin composition of the present aspect, the same effects as those of the lignin composition of the first aspect are obtained.

In one embodiment, the maximum value is 80 or more, 85 or more, 90 or more, 95 or more, or 100 or more, and is 250 or less, 230 or less, 200 or less, 180 or less, or 150 or less.

In one embodiment, in the lignin composition, a difference between integral distribution values (%) at molecular weights LogM 2.40 and 2.55 of the lignin composition, as measured by GPC, is 5 or more and 25 or less.

In one embodiment, the difference is 5 or more, 6 or more, 7 or more, 8 or more, 9 or more, or 10 or more, and is 25 or less, 20 or less, 18 or less, 16 or less, 15 or less, 14 or less, or 13 or less.

Although three aspects according to the present invention have been described above, two or more of these individual aspects can be combined, and an aspect in which two or more aspects are combined is also an aspect according to the present invention. In addition, the embodiment described for one aspect can be combined with another aspect.

The lignin composition of the present invention (the lignin compositions according to the first to third aspects) can be suitably produced by the method according to a first embodiment or a second embodiment described below.

In a first embodiment, the lignin composition of the present invention is extracted from acid treated wood-based biomass with a solvent.

Examples of the wood-based biomass include conifers and hardwoods such as Japanese cedar, Japanese cypress, hiba arborvitae, cherry, eucalyptus, beech, and bamboo. The acid treatment is performed, for example, by immersing the wood-based biomass in an aqueous solution containing sulfuric acid. By the acid treatment, the cellulose and hemicellulose contained in the wood-based biomass are separated (removed) into the aqueous solution. From this viewpoint, the "acid treated wood-based biomass" can be paraphrased as the "wood-based biomass from which some or all of cellulose and hemicellulose are removed".

As the solvent used for extraction, a mixed solvent of phenol and water is suitable. The mass ratio of phenol to water (phenol:water) is preferably 100:5 to 20. In addition, it is preferable that 90 mass% or more, 95 mass% or more, 99 mass% or more, 99.5 mass% or more, 99.9 mass% or more, or substantially 100 mass% of the solvent used for extraction be phenol and water. In the case of "substantially 100 mass%," an inevitable impurity may be contained. The solvent used for the extraction preferably does not contain an acid or an alkali.

At the time of extraction, it is preferable to heat and pressurize the acid treated wood-based biomass in a state of being immersed in a solvent for a predetermined time. The heating temperature is preferably 120°C to 220°C. The pressure is preferably 0.5 to 1.7 MPa. The duration for continuing heating and pressurization is preferably 1 to 3 hours. At the time of extraction, a pressure vessel capable of stirring the acid treated wood-based biomass and the solvent can be used.

In the second embodiment, the lignin composition of the present invention is extracted with a solvent from an exploded palm empty fruit bunch (EFB: Empty Fruits Bunch).

The explosion treatment can be performed, for example, by exposing the palm empty fruit bunch to saturated steam at 220°C to 230°C for 20 minutes under pressure in a pressure vessel, and then releasing the palm empty fruit bunch to the atmosphere at once.

For the solvent (extraction solvent), the description of the first embodiment is incorporated.

At the time of extraction, it is preferable to heat and pressurize the exploded palm empty fruit bunch in a state of being immersed in a solvent for a predetermined time.

The heating temperature is preferably 230°C to 250°C.

The pressure is preferably 2.0 to 2.4 MPa.

The duration for continuing heating and pressurization is preferably 1 to 3 hours.

At the time of extraction, a pressure vessel capable of stirring the exploded palm empty fruit bunch and the solvent can be used.

In the first embodiment and the second embodiment described above, the extracted lignin composition may be purified as necessary. Hereinafter, an example of purification will be described.

The lignin composition after extraction can be first subjected to a solid-liquid separation step as purification (purification step). The lignin composition after extraction is dissolved in the solvent, but the unextracted components and inorganic impurities are present in the liquid as a solid. These are preferably removed by filtration (while hot). For example, the extract is placed in a pressure filtration apparatus (while hot) equipped with a filter paper such as No. 5C or No. 2, and subjected to pressure-filtration at about 20°C to 100°C, about 20°C to 70°C, typically about 20°C to 50°C, about 0.1 to 0.99 MPa, typically about 0.1 to 0.4 MPa. The filtered solid may be appropriately diluted and/or washed with a solvent and filtered. In the filtration, the lignin composition is contained in the filtrate. In addition, for example, the extraction product liquid may be diluted and/or washed with any one or more kinds of low boiling point general-purpose solvents such as water, ketones such as acetone and methyl ethyl ketone, alcohols such as methanol, ethanol, and isopropyl alcohol, and ethers such as tetrahydrofuran, and subjected to solid-liquid separation. In the solid-liquid separation, the lignin composition is contained in a solution.

A method for performing the solid-liquid separation is not particularly limited, and examples thereof include filtration, filter press, centrifugation, and dehydration.

A solid-liquid separation device used for the solid-liquid separation is not particularly limited, and for example, a filtration device using a filter or the like, a vacuum filtration machine, a centrifuge, a screw decanter, a dewatering machine such as a belt press dewatering machine, a screw press dewatering machine, and a filter press dewatering machine, a vibration sieve, or the like can be used. Examples of the centrifuge include a decanter type and a disc type. These solid-liquid separation devices may be used singly, or two or more devices may be used in combination.

By performing the solid-liquid separation using the solid-liquid separation device described above, solids such as unextracted components and inorganic impurities contained in the lignin composition can be efficiently and effectively removed. Therefore, it is possible to obtain a lignin composition in which the content of components other than lignin contained in the lignin-containing material is effectively reduced without reprecipitating the lignin composition obtained by performing distillation or drying to solid under reduced pressure described later.

In addition, the solution containing the lignin composition obtained through the extraction step and, if necessary, the solid-liquid separation step may be subjected to distillation. The distillation can be performed by performing distillation under reduced pressure at a temperature of about 40°C to 200°C, typically about 50°C to 150°C, under reduced pressure of about 3 to 20 kPa, typically about 5 to 10 kPa to remove the solvent. In the distillation, the lignin composition is obtained as a solid or a viscous solid. In addition, for example, in the case of using other diluent solvents, it can be performed by performing distillation under reduced pressure at an appropriate temperature in consideration of the boiling point of the solvent to remove the low boiling point general-purpose solvent, and then removing the solvent used for extraction by the same method as described above. In the distillation, the lignin composition is obtained as a solid or a viscous solid.

After the extraction step or the solid-liquid separation step, if necessary, the lignin composition obtained by performing one or both of the solid-liquid separation step and the distillation may be subjected to a drying step for purifying the lignin composition by removing a solvent (for example, an organic solvent A) remaining therein.

The drying step may be performed by heating to about 50°C to 250°C, typically about 100°C to 180°C, under reduced pressure of, for example, about 0.1 to 10 kPa, typically about 1.0 to 5.0 kPa, and performing drying to solid under reduced pressure such as vacuum drying, in a solid or molten state. In addition, the drying step may be performed by subjecting the lignin composition in a heated fluid state after distillation directly to the same drying to solid under reduced pressure such as vacuum drying.

In addition, the drying step is not limited to the drying to solid under reduced pressure described above, and may be performed, for example, by blowing air to the lignin composition under normal pressure and an inert atmosphere (for example, a nitrogen atmosphere) to remove the solvent remaining in the lignin composition.

Examples of the drying device used for drying include a thin film dryer such as a disk dryer or a drum dryer, a paddle dryer, a stirring dryer, a devolatilization extruder, and a biaxial continuous kneader. These drying devices may be used singly, or two or more devices may be used in combination.

By performing drying using the drying devices described above, the solvent remaining in the lignin composition can be efficiently and effectively removed. Therefore, it is possible to obtain a lignin composition in which the residual amount of a solvent component such as an organic solvent used in the extraction step is effectively reduced without reprecipitating the lignin composition obtained through the drying step.

The lignin composition obtained by distillation or drying to solid under reduced pressure is preferably not reprecipitated. Accordingly, a lignin composition containing the compound represented by the formula (1) in the above content range can be easily obtained.

In addition, in the purification step, the filtration, distillation, and drying to solid under reduced pressure may be performed in any one or in combination of two or more thereof.

The organic solvent remaining in the lignin composition is not particularly limited, and is typically less than 30 mass%, preferably less than 10 mass%, more preferably less than 5 mass%, and still more preferably less than 1 mass% with respect to a total amount thereof.

By the method according to the first embodiment or the second embodiment described above, of the content of lignin contained in the lignin-containing raw material (for example, acid treated wood-based biomass or exploded palm empty fruit bunch), 50 mass% or more is preferably taken out as a lignin composition, more preferably 60 mass% or more is taken out as a lignin composition, still more preferably 70 mass% or more is taken out as a lignin composition, still further preferably 80 mass% or more is taken out as a lignin composition, and still further preferably 90 mass% or more is taken out as a lignin composition.

The lignin composition of the present invention can be used as a forming material for various resins or rubbers. For example, it can be used as a modifier for a thermosetting resin, a crosslinking reaction accelerator, or a rubber reinforcing material.

### [Thermosetting Resin Composition]

A thermosetting resin composition (forming material) according to an aspect of the present invention contains the above-described lignin composition of the present invention and a thermosetting resin. Using a lignin composition in the process of producing the thermosetting resin is also included.

According to the thermosetting resin composition of the present aspect, an effect of excellent mechanical physical properties and also excellent fluidity can be obtained.

Examples of the thermosetting resin include a phenolic resin, a urethane resin, an epoxy resin, a urea resin, a melamine resin, an unsaturated polyester resin, a diallyl phthalate resin, a silicone resin, an alkyd resin, and a polyimide.

Among them, a phenolic resin, a urethane resin, and an epoxy resin are preferable, a phenolic resin and a urethane resin are more preferable, and a phenolic resin is still more preferable because they can react with the lignin composition and can also be used as a diluent. Among the phenolic resins, novolac-based phenolic resins and resol phenolic resins are more preferable, and novolac-based phenolic resins are still more preferable.

These thermosetting resins may be used singly or in combination of two or more kinds thereof.

Examples of the epoxy resin include a glycidyl ether-based epoxy resin synthesized from epichlorohydrin or the like and a compound containing two or more hydroxyl groups in the molecule, such as 2,2-bis(4'-hydroxyphenyl)propane (referred to as bisphenol A), bis(2-hydroxyphenyl)methane (referred to as bisphenol F), 4,4'-dihydroxydiphenylsulfone (referred to as bisphenol S), 4,4'-dihydroxybiphenyl, resorcinol, saligenin, trihydroxydiphenyldimethylmethane, tetraphenylolethane, halogen-substituted and alkyl-substituted products thereof, butanediol, ethylene glycol, erythritol, novolac, glycerin, and polyoxyalkylene; a glycidyl ester-based epoxy resin synthesized from a compound containing two or more hydroxyl groups in the molecule, a phthalic acid glycidyl ester, and the like; an epoxy resin containing a glycidyl group, such as a glycidylamine-based epoxy resin synthesized from epichlorohydrin or the like and a primary or secondary amine such as aniline, diaminodiphenylmethane, metaxylenediamine, or 1,3-bisaminomethylcyclohexane; and epoxy resins containing no glycidyl group, such as epoxidized soybean oil, epoxidized polyolefin, vinylcyclohexene dioxide, and dicyclopentadiene dioxide.

Among them, cresol novolac type epoxy resins and phenol novolac type epoxy resins which are similar in chemical structure to lignin and have good compatibility are preferable.

The content of the lignin composition in the thermosetting resin composition may be determined according to the purpose, and is preferably 5 to 300 parts by mass, more preferably 10 to 100 parts by mass, and still more preferably 20 to 100 parts by mass with respect to 100 parts by mass of the thermosetting resin from the viewpoint of obtaining good physical properties and formability.

### (Filler)

In one embodiment, the thermosetting resin composition may further contain a filler material. The filler material may be an inorganic filler material or an organic filler material.

Examples of the inorganic filler material include spherical or crushed fused silica, silica powder such as crystalline silica, alumina powder, glass powder, glass fiber, glass flake, mica, talc, calcium carbonate, alumina, hydrated alumina, boron nitride, aluminum nitride, silicon nitride, silicon carbide, titanium nitride, zinc oxide, tungsten carbide, magnesium oxide, and the like.

In addition, examples of the organic filler material include carbon fiber, aramid fiber, paper powder, wood powder, cellulose fiber, cellulose powder, rice hull powder, fruit shell/nut powder, chitin powder, and starch.

The inorganic filler material and the organic filler material may be used singly or in combination of two or more kinds thereof, and the content thereof is determined according to the purpose. In a case where an inorganic filler material and/or an organic filler material is contained, it is desirable that the content of the inorganic filler material and/or the organic filler material is appropriate in order to obtain good physical properties and formability. From this viewpoint, the content of the inorganic filler material and/or the organic filler material is preferably 50 to 200 parts by mass, and more preferably 80 to 150 parts by mass, with respect to total 100 parts by mass of the thermosetting resin and the lignin composition.

### (Curing Agent)

The thermosetting resin composition may further contain a curing agent.

In a case where the thermosetting resin is a phenolic resin, examples of the curing agent include hexamethylenetetramine (hexamine), hexaformaldehyde, and paraformaldehyde. These may be used singly or in combination of two or more kinds thereof.

In a case where the thermosetting resin is a urethane resin, examples of the curing agent include, as polyisocyanates, aromatic polyisocyanates such as tolylene diisocyanate (TDI), 4,4'-diphenylmethane diisocyanate (MDI), polymeric MDI (MDI-CR), and carbodiimide-modified MDI (liquid MDI); aliphatic polyisocyanates such as norbornane diisocyanate (NBDI), isophorone diisocyanate (IPDI), hexamethylene diisocyanate (HDI), 4,4'-methylene-bis(cyclohexyl isocyanate) (hydrogenated MDI), and xylylene diisocyanate (XDI); and blocked isocyanates. These may be used singly or in combination of two or more kinds thereof.

In a case where the thermosetting resin is an epoxy resin, the lignin composition is used as a curing agent, in this case, the epoxy resin and the novolac-based phenolic resin may be used in combination.

In addition to the curing agent, an inorganic base such as calcium hydroxide, sodium hydroxide, potassium hydroxide, calcium oxide, or magnesium oxide, a Lewis acid such as zinc chloride or zinc acetate, a catalyst such as triethylamine, an organometallic catalyst such as zirconium or aluminum, dibutyltin laurate, a phenol salt of DBU, an octylate, amines, imidazoles, an ammonium salt, phosphines, a phosphonium salt, or the like may be used in order to further enhance the curing speed and the degree of curing. These may be used singly or in combination of two or more kinds thereof.

### (Other Additives)

Various additives can be added to the thermosetting resin composition according to the present embodiment as long as the properties of a formed body obtained from the thermosetting resin composition are not impaired. In addition, depending on the purpose, a compatibilizer, a surfactant, and the like can be further added.

As the compatibilizer, a resin obtained by adding maleic anhydride, epoxy, or the like to a thermoplastic resin and introducing a polar group, for example, a maleic anhydride-modified polyethylene resin, a maleic anhydride-modified polypropylene resin, or various commercially available compatibilizers may be used in combination.

In addition, examples of the surfactant include linear fatty acids such as stearic acid, palmitic acid, and oleic acid, and branched and cyclic fatty acids with rosins, but are not particularly limited thereto.

Furthermore, examples of the additive other than those described above that can be blended include a flexibilizer, a heat stabilizer, an ultraviolet absorber, a flame retardant, an antistatic agent, an antifoaming agent, a thixotropy imparting agent, a release agent, an antioxidant, a plasticizer, a low stress agent, a coupling agent, a dye, a light scattering agent, and a small amount of a thermoplastic resin. These may be used singly or in combination of two or more kinds thereof.

### (Kneading and Forming)

The components used in the thermosetting resin composition can be compounded and kneaded by a method in which the components are preliminarily mixed with a commonly used apparatus, for example, a ribbon blender, a drum tumbler, or the like, and a Henschel mixer, a Banbury mixer, a single-screw extruder, a twin-screw extruder, a multi-screw extruder, a roll kneader, a co-kneader, or the like is used. The heating temperature during kneading is typically appropriately selected in the range of 100°C to 300°C.

The method for forming the thermosetting resin composition is not particularly limited. Examples thereof include a press molding method, an injection molding method, a transfer molding method, a medium molding method, and an FRP molding method.

Examples of the formed body and the like using the thermosetting resin composition include a heat insulating material (heat insulation device for housing and refrigerator, and ship/vehicle use), an electronic component, a resin for flux sand, a resin for coated sand, an impregnation resin, a stacking resin, a prepreg, a decorative plate, a binder, a friction material, an FRP molding resin, a binder, an adhesive, a coating material, an ink, a sealant, a sliding material, a carbon material, an automobile component, an automobile tire reinforcing material, an OA device, a machine, an information communication device, and an industrial material.

### [Rubber Composition]

A rubber composition according to an aspect of the present invention includes the above-described lignin composition of the present invention and a rubber material.

According to the rubber composition of the present aspect, an effect of excellent mechanical physical properties and also excellent fluidity can be obtained.

Examples of the rubber material include various natural rubbers and various synthetic rubbers. Specific examples thereof include natural rubber (NR), modified natural rubber, styrene butadiene rubber (SBR), butadiene rubber (BR), isoprene rubber (IR), butyl rubber (IIR), ethylene propylene diene rubber (EPDM), acrylonitrile butadiene rubber (NBR), and chloroprene rubber (CR). These may be used singly or may be used in combination of two or more kinds thereof.

The addition amount of the rubber material is not particularly limited, but is preferably 100 to 10000 parts by mass with respect to 100 parts by mass of the lignin composition. This makes it possible to suppress the hardness of the rubber composition from becoming too high and the elongation from becoming small while sufficiently securing the reinforcing effect of the rubber composition.

The rubber composition of the present embodiment may contain a filler in addition to the components described above. As the filler, those typically used in the rubber composition, such as carbon black, silica, alumina, and cellulose fiber, can be employed.

The content of the filler is preferably 10 to 150 parts by mass with respect to 100 parts by mass of the rubber material.

In one embodiment, the rubber composition may contain a crosslinking agent.

The crosslinking agent is not particularly limited as long as it can crosslink with any one or both of the rubber material and the lignin composition.

Furthermore, the rubber composition may contain, for example, a softener, a tackifier, an antioxidant, an antiozonant, an antiaging agent, sulfur or other vulcanizing agents, a vulcanization accelerator, a vulcanization promotion aid, a peroxide, zinc oxide, and stearic acid.

The rubber composition can be produced, for example, by kneading a rubber material, a lignin composition, and other raw materials. If necessary, any raw material may be preliminarily mixed and then kneaded. In addition, the order of kneading the raw materials described above is not particularly limited, and all the raw materials may be kneaded simultaneously, or may be sequentially kneaded in an arbitrary order.

A cured product (formed body) of the rubber composition can be obtained by forming and curing the rubber composition. The forming method is not particularly limited since it varies depending on the application, but in a case where forming is performed using a mold, the rubber composition is molded using a mold provided with a hydraulic press. Thus, a cured product of the rubber composition molded into a desired shape is obtained.

The formed body obtained by curing the rubber composition of the present embodiment can be used for tires and the like.

### [Examples]

Hereinafter, examples of the present invention will be described, but the present invention is not limited to these examples.

### [Preparation of Lignin Composition]

### Example 1

### (1) Extraction Step

100 parts by mass (parts by mass as lignin) of the acid treated wood-based biomass (lignin content: 42 mass%), 245 parts by mass of phenol, and 27 parts by mass of water were placed in a stirrable pressure-resistant container, and heated and stirred at 1.7 MPa and 220°C for 2 hours.

### (2) Purification Step

### (2-1) Filtration

After the dilution with acetone, the extract obtained in the extraction step was placed in a pressure filtration apparatus incorporating No. 2 filter paper, pressurized to 0.1 to 0.4 MPa with compressed air or nitrogen, and filtered.

### (2-2) Distillation

The filtrate obtained in the above (2-1) was distilled under reduced pressure (5 to 10 kPa) by heating (40°C to 60°C) using an evaporator to remove acetone. In addition, phenol was removed by heating under reduced pressure (100°C to 140°C) and distillation under reduced pressure using an evaporator.

### (2-3) Drying to Solid under Reduced Pressure

In order to remove phenol remaining in the above (2-2), vacuum drying was performed by heating (100°C to 150°C) under reduced pressure (1.0 to 5.0 kPa) to remove phenol, thereby obtaining a lignin composition.

### Example 2

A lignin composition was obtained in the same manner as in Example 1 except that, in the extraction step, the pressure was 1.1 MPa, and the temperature was 200°C.

### Example 3

A lignin composition was obtained in the same manner as in Example 1 except that, in the extraction step, the pressure was 0.7 MPa, and the temperature was 180°C.

### Example 4

A lignin composition was obtained in the same manner as in Example 1 except that in, the extraction step, the pressure was 0.5 MPa, and the temperature was 120°C.

### Example 5

A lignin composition was obtained in the same manner as in Example 1 except that 100 parts by mass (parts by mass as lignin) of exploded palm empty fruit bunch (lignin content: 41 mass%), 245 parts by mass of phenol, and 27 parts by mass of water were placed in a stirrable pressure-resistant container, and heated and stirred at 2.2 MPa and 240°C for 2 hours.

### Comparative Example 1

100 parts by mass (68 parts by mass as lignin) of the saccharified residue of the non-edible plant biomass (lignin content: 68 mass%) and 272 parts by mass of phenol were put in a stirrable pressure-resistant container, and heated and stirred at 0.8 MPa and 220°C for 2 hours.

The obtained extract was subjected to the same purification step as in Example 1 to obtain a lignin composition.

### Comparative Example 2

A lignin composition was obtained in the same manner as in Comparative Example 1 except that 55 parts by mass of phenol, 27 parts by mass of water, and 190 parts by mass of ethanol were used, an extraction pressure was 2.8 MPa, and an extraction time was 2 hours.

### Comparative Example 3

500 g of bagasse (obtained by drying squeezed sugar cane residue) was heat-treated at 200°C for 2 hours in the presence of 2100 mL of 1-butanol and 3300 mL of water. Cellulose-containing solids were then removed by filtration (No. 2 filter paper). The aqueous layer was separated from the obtained filtrate, and the 1-butanol layer was taken out. The taken 1-butanol layer was concentrated and dried to solid to obtain a lignin composition.

### Comparative Example 4

Kraft lignin (Lignin, alkali (product No. 370959) manufactured by SIGMA-ALDRICH) was used as a lignin composition (lignin).

### [Analysis of Lignin Composition]

For the lignin compositions of Examples 1 to 5 and Comparative Examples 1 to 4, the following items were evaluated.

### (1) Average Molecular Weight

The number average molecular weight Mn, the weight average molecular weight Mw, the Z average molecular weight Mz, and the molecular weight distribution (Mw/Mn) were measured by gel permeation chromatography (GPC). Specifically, a sample was dissolved in tetrahydrofuran to prepare a measurement sample. 100 µL of a measurement sample was injected to a GPC system "HLC-8220GPC (manufactured by Tosoh Corporation)" or "HLC-8420GPC (manufactured by Tosoh Corporation)" in which two "TSKgel GMHXL (manufactured by Tosoh Corporation)" columns and "G2000HXL (manufactured by Tosoh Corporation)", which are organic general-purpose columns filled with a styrene-based polymer filler, were connected in series, tetrahydrofuran as an eluent was developed at 40°C at 1.0 mL/min, and the retention time was measured using a differential refractive index (RI).

Each average molecular weight of the sample was calculated from a calibration curve showing the relationship between the retention time and the molecular weight of standard polystyrene separately prepared.

### As standard polystyrene for preparing a calibration curve, the following was used.

Standard polystyrene for calibration curve: "TSKgel" (weight average molecular weight: 590 (type A-500), 1,010 (type A-1000), 2,630 (type A-2500), 5,970 (type A-5000), 10,200 (type F-1), 18,100 (type F-2), 37,900 (type F-4), 96,400 (type F-10), 190,000 (type F-20), 427,000 (type F-40), 706,000 (type F-80), and 1,090,000 (type F-128), and 4,480,000 (type F-450)), manufactured by Tosoh Corporation

The following items (a) to (d) were determined from the molecular weight chart of the sample obtained by GPC.

### (a) Molecular weight when differential distribution value shows maximum value

In the range of the molecular weight LogM 2.40 to 2.60 in the chart of the molecular weight of the sample obtained by GPC (dw/dLogM is plotted on the y axis, and LogM is plotted on the x axis), the value of the molecular weight LogM at which the differential distribution value (dw/dLogM) shows the maximum value was taken as a "peak at molecular weight LogM 2.40 to 2.60". In addition, the "maximum value" was defined as a "maximum value of differential distribution value (dw/dLogM) (di)".

In addition, in the range of the molecular weight LogM 2.60 to 2.75 in the same chart, the value of the molecular weight LogM at which the differential distribution value (dw/dLogM) shows the maximum value was taken as a "peak at molecular weight LogM 2.60 to 2.75". In addition, the "maximum value" was defined as a "maximum value of differential distribution value (dw/dLogM) (tri)".

As an example, a molecular weight chart (dw/dLogM is plotted on the y axis, and LogM is plotted on the x axis) obtained in Example 1 is shown in Fig. 1.

### (b) Integral distribution value (%) in molecular weights LogM 2.40, LogM 2.55, LogM 2.64, and LogM 2.73

In the chart (The y axis represents an integral distribution value (%), and the x axis represents LogM plotted) of the molecular weight of the sample obtained by GPC, the integral distribution value (%) in each of the molecular weights LogM 2.40, LogM 2.55, LogM 2.64, and LogM 2.73 was obtained.

### (c) Integral distribution value (%) 2.55-2.40

A numerical value of a difference obtained by subtracting the integral distribution value (%) of the molecular weight LogM 2.40 from the integral distribution value (%) of the molecular weight LogM 2.55 was defined as an "integral distribution value (%) 2.55-2.40".

### (d) Integral distribution value (%) 2.73-2.55

A numerical value of a difference obtained by subtracting the integral distribution value (%) of the molecular weight LogM 2.55 from the integral distribution value (%) of the molecular weight LogM 2.73 was defined as an "integral distribution value (%) 2.73-2.55".

### (2) Content Ratio of Phenol

A content ratio of phenol was measured using high performance liquid chromatography (HPLC). Specifically, 50 mg of a sample such as a lignin composition was dissolved in 0.5 mL of tetrahydrofuran, and 4.5 mL of a mixed solvent in which water/acetonitrile was 4/1 (volume ratio) was added, then the mixture was stirred for 30 minutes, and the supernatant was filtered to prepare a measurement sample. 1 µL of the measurement sample was injected into "ACQUITY UPLC H-CLASS" connected to a BEH C18 (1.7 µm × 2.1 mm × 50 mm) column. A column temperature was set to 40°C, a mixed solvent of a 2mM ammonium acetate aqueous solution (A) and acetonitrile (B) was used as a mobile phase, a gradient method in which a flow ratio (A:B) was gradually changed from 80:20 to 10:90 was used, and measurement was performed using an ultraviolet-visible spectroscopy (UV) detector 280 nm as a detection unit. The phenol content ratio in the sample was calculated from a calibration curve of a separately prepared standard phenol solution.

### (3) Content Ratio of Phenol Trimer

The content ratio of the phenol trimer was measured using liquid chromatography/mass spectrometry (LC/MS). Specifically, 50 mg of a sample such as a lignin composition was dissolved in 0.5 mL of tetrahydrofuran, 4.5 mL of a mixed solvent in which water/acetonitrile was 4/1 (volume ratio) was added, the mixture was stirred for 30 minutes, and the supernatant was filtered to prepare a measurement sample. 1 µL of a measurement sample was injected into an LC-MS system equipped with "ACQUITY UPLC H-CLASS" connected to a BEH C18 (1.7 µm × 2.1 mm × 50 mm) column in a separation section and "Xevo G2-XS QTof" in a detection section. The phenol trimer components were separated using a gradient method in which a column temperature was set to 40°C, a mixed solvent of a 2mM ammonium acetate aqueous solution (A) and acetonitrile (B) was used as a mobile phase, and the flow ratio (A:B) was gradually changed from 80:20 to 10:90.

The obtained phenol trimer components were ionized by electrospray, and then a mass-to-charge ratio was measured in the range of 50 to 1000 using a negative mode quadrupole-time-of-flight mass spectrometer.

The structures of the phenol trimers contained in the sample were determined as the compounds (a) to (e) from the mass-to-charge ratio assuming that all the compounds were detected in the deprotonated form. A chromatogram was extracted at a mass-to-charge ratio corresponding to the structure of each compound, and a peak area was calculated.

The content ratio of the phenol trimer component in the sample was calculated from a calibration curve of a standard 2,2'-dihydroxydiphenylmethane solution prepared separately.

### (4) Content Ratio of Compound Represented by Formula (2)

The content ratio of the compound represented by the formula (2) was measured using liquid chromatography/mass spectrometry (LC/MS). Specifically, the dimer components (a group of compounds containing two phenol residues) were separated using the same gradient method as in the above "(3) Content Ratio of Phenol Trimer".

The obtained dimer components were ionized by electrospray, and then the mass-to-charge ratio was measured in the range of 50 to 1000 using a negative mode quadrupole-time-of-flight mass spectrometer. From the mass-to-charge ratio, a peak area of the compound (2) contained in the sample was calculated.

The content ratio of the compound (2) in the sample was calculated from a calibration curve of a standard 2,2'-dihydroxydiphenylmethane solution prepared separately.

### (4) Softening point

A sample such as a lignin composition was pulverized in a mortar, and the pulverized sample was placed in an aluminum cup (circular upper portion φ60, lower portion φ53 × depth 15 mm) in an amount of 10 to 20 mg. An aluminum cup containing the sample was placed on a hot plate (IKA C-MAG HP7), and the cup was covered with an aluminum foil. After heating to 100°C, the temperature was increased in increments of 10°C, visual observation was performed, and the temperature at which dissolution was visually confirmed was adopted as the softening point.

The results are shown in Table 1.

**[Table 1]**

| | | Example 1 | Example 2 | Example 3 | Example 4 | Example 5 | Com. Example 1 | Com. Example 2 | Com. Example 3 | Com. Example 4 |
|---|---|---|---|---|---|---|---|---|---|---|
| Number average molecular weight Mn | | 644 | 677 | 651 | 688 | 581 | 750 | 904 | 1041 | 1077 |
| Weight average molecular weight Mw | | 1336 | 1554 | 1580 | 2117 | 1320 | 2120 | 2668 | 2917 | 2279 |
| Z average molecular weight Mz | | 2972 | 3740 | 4127 | 5926 | 3011 | 5385 | 6499 | 6767 | 4301 |
| Molecular weight distribution Mw/Mn | | 2.1 | 2.3 | 2.4 | 3.1 | 2.3 | 2.83 | 2.95 | 2.80 | 2.12 |
| Maximum peak (LogM) at molecular weight LogM 2.40 to 2.60 | | 2.45 | 2.45 | 2.46 | 2.45 | 2.51 | 2.47 | 2.57 | 2.55 | 2.54 |
| Maximum peak (LogM) at molecular weight LogM 2.60 to 2.75 | | 2.63 | 2.64 | 2.64 | 2.65 | 2.64 | 2.67 | 2.75 | 2.75 | 2.75 |
| Maximum value of differential distribution value (dw/dLogM) (di) | | 76.39 | 74.49 | 86.03 | 103.15 | 95.56 | 108.22 | 51.90 | 48.63 | 48.52 |
| Maximum value of differential distribution value (dw/dLogM) (tri) | | 144.45 | 128.19 | 134.49 | 117.34 | 98.20 | 71.99 | 45.19 | 66.12 | 52.28 |
| Integral distribution value (%) at molecular weight LogM 2.40 | | 3.80 | 3.73 | 3.86 | 4.02 | 7.80 | 3.57 | 3.42 | 1.57 | 0.61 |
| Integral distribution value (%) at molecular weight LogM 2.55 | | 14.03 | 13.74 | 15.58 | 16.74 | 20.66 | 15.53 | 12.73 | 8.64 | 5.06 |
| Integral distribution value (%) at molecular weight LogM 2.64 | | 24.66 | 22.91 | 25.10 | 24.52 | 29.30 | 21.79 | 12.67 | 13.43 | 8.84 |
| Integral distribution value (%) at molecular weight LogM 2.73 | | 34.70 | 32.21 | 34.87 | 33.59 | 37.70 | 28.07 | 17.15 | 18.55 | 13.68 |
| Integral distribution value (%) 2.55-2.40 | | 10.23 | 10.01 | 11.72 | 12.71 | 12.86 | 11.96 | 9.31 | 4.51 | 4.45 |
| Integral distribution value (%) 2.73-2.55 | | 20.67 | 18.47 | 19.29 | 16.86 | 17.04 | 12.53 | 4.43 | 9.91 | 8.63 |
| Softening point (°C) | | 115-125 | 130-140 | 130-140 | 120-130 | 100-110 | 120-130 | 170-180 | 140-150 | >300 |
| Content (% by mass) | Trimer (a) MW291.10 | 0.37 | 0.35 | 0.35 | 0.22 | 0.16 | 0.079 | 0.003 | 0.005 | 0.000 |
| | Trimer (b) MW306.36 | 0.94 | 0.91 | 0.87 | 0.58 | 0.25 | 0.010 | 0.003 | 0.010 | 0.001 |
| | Trimer (c) MW320.38 | 0.034 | 0.031 | 0.041 | 0.037 | 0.045 | 0.020 | 0.002 | 0.005 | 0.002 |
| | Trimer (d) MW322.35 | 0.035 | 0.028 | 0.023 | 0.02 | 0.034 | 0.027 | 0.002 | 0.003 | 0.008 |
| | Trimer (e) MW352.38 | 0.024 | 0.021 | 0.019 | 0.013 | 0.065 | 0.024 | 0.003 | 0.002 | 0.046 |
| | Total of trimers (a) to (e) | 1.403 | 1.340 | 1.303 | 0.870 | 0.554 | 0.160 | 0.013 | 0.026 | 0.057 |
| | Compound (2) | 0.008 | 0.007 | 0.005 | 0.003 | 0.012 | 0.002 | <0.001 | <0.001 | <0.001 |
| | Phenol | 1.8 | 0.9 | 0.7 | 2.1 | 0.9 | 4.3 | 1.3 | 0.03 | 0.03 |

The content of lignin in Examples 1 to 5 was 85 to 86 mass%.

### [Resin Composition and Formed body]

### Example 6

### (1) Preparation of Resin Composition

A phenolic resin (manufactured by Sumitomo Bakelite Co., Ltd., product name: PR-53195, softening point: 115°C) and the lignin composition prepared in Example 1 were charged into a separable flask equipped with a stirrer at a mass ratio (phenolic resin:lignin composition) of 35:15. After stirring and mixing at normal temperature for 5 minutes, the treated product was taken out from the flask to obtain a mixture of the lignin composition and the phenolic resin.

7 parts by mass of hexamethylenetetramine (curing agent: manufactured by KANTO CHEMICAL CO., INC.) were added to 50 parts by mass of the obtained mixture at normal temperature, and these were mixed for 5 minutes using a mortar grinder.

Thereafter, 50 parts by mass of glass fiber (glass milled fiber, PF80E-401 manufactured by Nitto Boseki Co., Ltd.) as a filler material, 1 part by mass of magnesium stearate (lubricant: manufactured by ADEKA Corporation) as an additive, and 1 part by mass of magnesium oxide (accelerator: manufactured by Kyowa Chemical Industry Co., Ltd.) were blended, and mixed for about 5 minutes using a mortar grinder.

The obtained mixture was kneaded with a heating roll at 120°C for 5 minutes, cooled, and then pulverized to obtain a resin composition (forming material).

### Example 7

A resin composition (forming material) was obtained in the same manner as in Example 6 except that the lignin composition of Example 2 was used instead of the lignin composition of Example 1.

### Example 8

A resin composition (forming material) was obtained in the same manner as in Example 6 except that the lignin composition of Example 3 was used instead of the lignin composition of Example 1.

### Example 9

A resin composition (forming material) was obtained in the same manner as in Example 6 except that the lignin composition of Example 4 was used instead of the lignin composition of Example 1.

### Example 10

A resin composition (forming material) was obtained in the same manner as in Example 6 except that the lignin composition of Example 5 was used instead of the lignin composition of Example 1.

### Comparative Example 5

A resin composition (forming material) was obtained in the same manner as in Example 6 except that the lignin composition of Comparative Example 1 was used instead of the lignin composition of Example 1.

### Comparative Example 6

A resin composition (forming material) was obtained in the same manner as in Example 6 except that the lignin composition of Comparative Example 2 was used instead of the lignin composition of Example 1.

### Comparative Example 7

A resin composition (forming material) was obtained in the same manner as in Example 6 except that the lignin composition of Comparative Example 3 was used instead of the lignin composition of Example 1.

### Comparative Example 8

A resin composition (forming material) was obtained in the same manner as in Example 6 except that the lignin composition of Comparative Example 4 was used instead of the lignin composition of Example 1.

### Blank

A resin composition (forming material) was obtained in the same manner as in Example 6 except that the use of the lignin composition of Example 1 was omitted.

### (2) Evaluation of Fluidity of Resin Composition (Spiral Flow)

Each of the resin compositions obtained in the blank, Examples 6 to 10, and Comparative Examples 5 to 8 was compressed at 15tf at room temperature to prepare a tablet. The tablet was subjected to preheating (preheated) at 90°C for 10 minutes in a hot air circulation type oven, and then put into a transfer forming machine (MF-O15: manufactured by Marushichi Co., Ltd.).

Forming was performed using a mold for spiral flow under the conditions of 165°C, 40 MPa, 5 minutes, and the length over which the resin composition flowed (spiral flow) was measured.

Ratios (%) of the spiral flow in Examples 6 to 10 and Comparative Examples 5 to 8 were determined when the spiral flow in the blank was taken as 100%.

### (3) Forming of Resin Composition

The resin composition prepared in the above (1) was compressed at 15tf at room temperature to prepare a tablet. The tablet was preheated at 90°C for 10 minutes in a hot air circulating oven, and then put into a transfer molding machine (MF-O15: manufactured by Marushichi Co., Ltd.).

Transfer molding was performed on a mold for a test piece (10 mm × 80 mm × 4 mm in thickness) under conditions of 165°C, 40 MPa, and 5 minutes. Thereafter, heat treatment was performed at 180°C for 8 hours to obtain a formed body (cured product of phenol-modified lignin resin composition).

### (4) Evaluation of Physical Properties of Formed body

The flexural strength and flexural modulus of the formed body (test piece) obtained in the above (3) were measured in accordance with JIS K 7171 "Plastics-Determination of flexural properties". Specifically, a three-point bending test was performed by applying a load at a speed of 2 mm/min and a distance between supporting points of 64 mm using a universal material testing machine (Model 5966, manufactured by Instron).

Ratios (%) of the flexural strength in Examples 6 to 10 and Comparative Examples 5 to 8 were determined when the flexural strength in the blank was taken as 100%.

Ratios (%) of the flexural modulus in Examples 6 to 10 and Comparative Examples 5 to 8 were determined when the flexural modulus in the blank was taken as 100%.

The results are shown in Table 2.

**[Table 2]**

| | | Blank | Example 6 | Example 7 | Example 8 | Example 9 | Example 10 | Com. Example 5 | Com. Example 6 | Com. Example 7 | Com. Example 8 |
|---|---|---|---|---|---|---|---|---|---|---|---|
| | Phenolic resin | 50 | 35 | 35 | 35 | 35 | 35 | 35 | 35 | 35 | 35 |
| | Lignin Composition (Example 1) | | 15 | | | | | | | | |
| | Lignin Composition (Example 2) | | | 15 | | | | | | | |
| | Lignin Composition (Example 3) | | | | 15 | | | | | | |
| | Lignin Composition (Example 4) | | | | | 15 | | | | | |
| | Lignin Composition (Example 5) | | | | | | 15 | | | | |
| Composition (parts by mass) | Lignin Composition (Comparative Example 1) | | | | | | | 15 | | | |
| | Lignin composition (Comparative Example 2) | | | | | | | | 15 | | |
| | Lignin composition (Comparative Example 3) | | | | | | | | | 15 | |
| | Lignin composition (Comparative Example 4) | | | | | | | | | | 15 |
| | Glass fiber | 50 | 50 | 50 | 50 | 50 | 50 | 50 | 50 | 50 | 50 |
| | Curing agent | 7 | 7 | 7 | 7 | 7 | 7 | 7 | 7 | 7 | 7 |
| | Accelerator | 1 | 1 | 1 | 1 | 1 | 1 | 1 | 1 | 1 | 1 |
| | Lubricant | 1 | 1 | 1 | 1 | 1 | 1 | 1 | 1 | 1 | 1 |
| Evaluation | Spiral flow (vs blank%) | 100 | 72.6 | 102.2 | 99.5 | 61.3 | 87.6 | 43.5 | 45.2 | 17.7 | 5.6 |
| | Flexural strength (vs blank%) | 100 | 102.6 | 110.3 | 100.0 | 110.3 | 103.4 | 113.1 | 130.9 | 125.6 | Unmeasurable |
| | Flexural modulus (vs blank%) | 100 | 104.2 | 102.5 | 111.9 | 111.0 | 109.3 | 104.8 | 113.1 | 110.8 | Unmeasurable |

As shown in Table 2, the thermosetting resin composition of Examples 6 to 10 not only has improved mechanical physical properties (flexural strength and flexural modulus) as compared with the blank, but also has remarkably higher spiral flow (fluidity) as compared with Comparative Examples 5 to 8. From this, it was found that the lignin composition containing two or more compounds represented by the formula (1) and having a total content of the compounds of 0.05 mass% or more can remarkably suppress a decrease in fluidity when added to the thermosetting resin.

In addition, it was confirmed that the thermosetting resin compositions of Examples 6 to 10 can improve the surface smoothness (smoothness) of a formed body as compared with Comparative Examples 5 to 8.

Although several embodiments and/or examples of the present invention have been described above in detail, for those skilled in the art, it is easy to add numerous modifications to these exemplary embodiments and/or examples without substantially departing from the novel teachings and effects of the present invention. Therefore, many of these modifications fall within the scope of the present invention.

The contents of the literature cited in this specification and the applications on which the present application claims priority under the Paris Convention are incorporated herein by reference in their entirety.

## Claims

1. A lignin composition comprising two or more compounds represented by formula (1), wherein a total content of the compounds is 0.50 mass% or more, 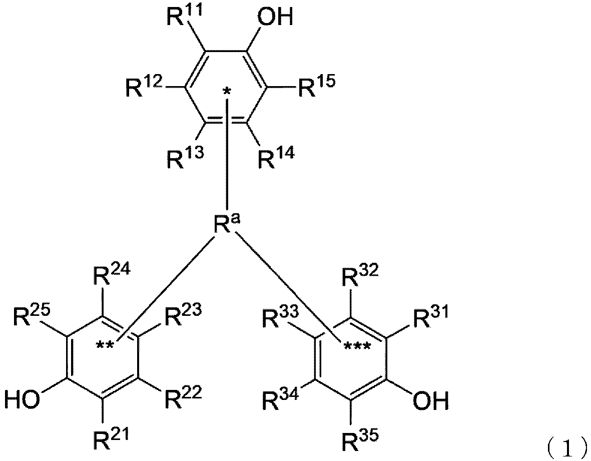 (in the formula (1),
R^{a} represents a trivalent saturated hydrocarbon group having 1 to 3 carbon atoms;
each of single bonds *, **, and *** of R^{a} is bonded to any of the carbon atoms constituting a corresponding benzene ring;
one of R¹¹ to R¹⁵ is a single bond that is bonded to R^{a};
one of R²¹ to R²⁵ is a single bond that is bonded to R^{a};
one of R³¹ to R³⁵ is a single bond that is bonded to R^{a}; and
R¹¹ to R¹⁵, R²¹ to R²⁵, and R³¹ to R³⁵, which are not single bonds bonded to R^{a}, each represent a hydrogen atom, a methoxy group, a hydroxy group, a furyl group, a hydroxymethylfuryl group, a hydroxyphenyl group, a hydroxymethoxyphenol group, or a hydroxydimethoxyphenol group).

2. The lignin composition according to claim 1, wherein a weight average molecular weight (Mw) is 1,000 to 3,000.

3. The lignin composition according to claim 1 or 2, wherein a molecular weight distribution (Mw/Mn) is 1.0 to 4.0.

4. The lignin composition according to any one of claims 1 to 3, wherein a total content of the compounds represented by the formula (1) is 0.50 to 5.00 mass%.

5. The lignin composition according to any one of claims 1 to 4, wherein a content of compound (2) is 0.1 mass% or less, 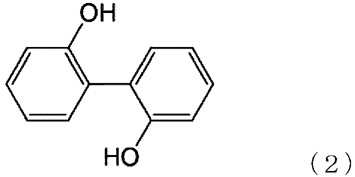 .

6. The lignin composition according to any one of claims 1 to 5, wherein a content of a free phenol monomer is 0.02 mass% or more and 5.0 mass% or less.

7. The lignin composition according to any of claims 1 to 6, which has a softening point of 100°C or higher and lower than 250°C.

8. A lignin composition, wherein a difference between integral distribution values (%) at molecular weights LogM 2.55 and 2.73 of the lignin composition, as measured by gel permeation chromatography (GPC), is 15 or more and 25 or less.

9. A lignin composition, wherein a maximum value of a peak of a differential distribution value (dw/dLogM) present at a molecular weight of LogM 2.60 to 2.75 of the lignin composition, as measured by gel permeation chromatography (GPC), is 80 or more and 250 or less.

10. A thermosetting resin composition comprising:
the lignin composition according to any of claims 1 to 9; and
a thermosetting resin.

11. The thermosetting resin composition according to claim 10, wherein the thermosetting resin includes one or more selected from the group consisting of a phenolic resin, a urethane resin, an epoxy resin, a urea resin, a melamine resin, an unsaturated polyester resin, a diallyl phthalate resin, a silicone resin, an alkyd resin, and a polyimide.

12. Use of the lignin composition according to any one of claims 1 to 9 for accelerating a crosslinking reaction in a thermosetting resin forming material containing a thermosetting resin.

13. The use of the lignin composition according to claim 12, wherein the thermosetting resin includes one or more selected from the group consisting of a phenolic resin, a urethane resin, an epoxy resin, a urea resin, a melamine resin, an unsaturated polyester resin, a diallyl phthalate resin, a silicone resin, an alkyd resin, and a polyimide.

14. A method for accelerating a crosslinking reaction using the lignin composition according to any one of claims 1 to 9, in a thermosetting resin forming material containing a thermosetting resin.

15. A modifier for a thermosetting resin or a crosslinking reaction accelerator for a thermosetting resin, comprising the lignin composition according to any one of claims 1 to 9.

16. A rubber composition comprising the lignin composition of any of claim 1 to 9 and a rubber material.

17. A formed body obtained by curing the thermosetting resin composition according to claim 10 or the rubber composition according to claim 16.
